# EUROPEAN PATENT APPLICATION

(11) **EP 1 213 238 A1**
(43) Date of publication of application: **12.06.2002**
(21) Application number: 01310171.2
(22) Date of filing: 05.12.2001
(51) Int. Cl.: B65G 9/00

(54) **Linear guide for preventing wear to contact face**

(30) Priority: 05.12.2000 JP 2000370613
(71) Applicant: Isel Co., Ltd., Yao-shi, Osaka 581-0068 (JP)
(72) Inventor: Masanori, Mochizuki, Yao-shi, Osaka, 581-0074 (JP)
(74) Representative: Abbie, Andrew Kenneth

(57) **Abstract**

A linear guide (1) includes a linearly extending rail (10) having a first rail face (10a) and a second rail face (10b) that are disposed at an acute angle θ, and a slide unit (2) provided slidably on the rail (10). The slide unit (2) includes a slide unit body (20), a first needle bearing (30) and a second needle bearing (35) that are respectively received in through holes (25, 26) formed in the slide unit body (20), and a first supporting shaft (22) and a second supporting shaft (24) that are disposed perpendicular to the extending direction of the rail faces (10a, 10b) and that rotatably support the first and second needle bearings (30, 35), respectively.

## Description

### BACKGROUND OF THE INVENTION

The present invention relates to a linear guide, and more particularly, to an improved structure for preventing wear to the contact faces of rolling elements of the linear guide.

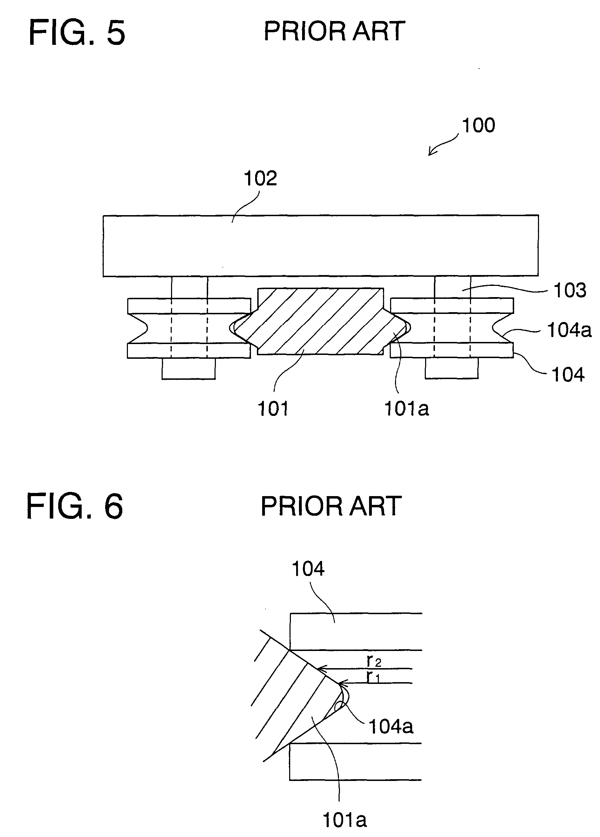

A linear guide is generally used for conveying products or articles in plants or factories. As shown in FIG. 5, a prior art linear guide 100 includes a linear rail 101 extending perpendicular to the page, a slide base 102 provided over the rail 101, and a pair of tracking pulleys 104 each supported rotatably around a shaft 103 fitted to the bottom surface of the slide base 102. A linearly extending projection 101a of the rail 101 is engaged with a groove 104a formed around an outer circumferential surface of each tracking pulley 104.

In operation, when the slide base 102 slides along the extending direction of the rail 101, each tracking pulley 104 rotates around the shaft 103 and rolls along the projection 101a of the rail 101 with the groove 104a of the tracking pulley 104 engaged with the projection 101a of the rail 101.

In such a prior art linear guide, as shown in FIG. 6, a contact face between the groove 104a of the tracking pulley 104 and the projection 101a of the rail 101 is formed at positions where a distance from a center line of the tracking pulley 104, or a radius of the tracking pulley 104 is varied.

Thus, a circumferential speed of the tracking pulley 104 at a contact point having a radius of r₁ differs from that of the tracking pulley 104 at another contact point having a radius of r₂ (>r₁). Thus, when the tracking pulley 104 rolls along the projection 101a of the rail 101 and slides along the rail 101, a slippage will occur at positions where such a circumferential speed is different. As a result, the contact face between the groove 104a of the tracking pulley 104 and the projection 101a of the rail 101 will wear.

Moreover, in the linear guide shown in FIG. 5, since the shaft 103 supporting the tracking pulley 104 is cantilevered under the slide base 102, a supporting rigidity is low.

An object of the present invention is to provide a linear guide that can prevent wear to the contact face.

Another object of the present invention is to provide a compact linear guide.

It is yet another object of the present invention to increase a supporting rigidity of the linear guide.

A further object of the present invention is to provide a linear guide that enables an easy machining and assembly.

### SUMMARY OF THE INVENTION

The present invention relates to a linear guide. The linear guide includes a linearly extending rail and a slide unit slidable along the rail. The rail has a first and second flat rail face disposed at an acute angle. The slide unit includes a slide unit body, a first and second roller-shaped rolling element, or a roller, that is provided in the slide unit body and that respectively rolls on the first and second rail face, and a first and second supporting shaft that respectively supports the first and second rolling element rotatably and that extends in the direction orthogonal to the direction of travel of the slide unit.

Preferably, both the first and second rail faces are disposed at opposite sides of the rail. In this case, the first and second rolling elements as well as the first and second supporting shafts are disposed at opposite sides of the rail, correspondingly to the first and second rail faces . Also, the slide unit body has a pair of downwardly extending leg portions. The first supporting shaft on one side of the rail is coaxial with the first supporting shaft on the other side of the rail.

Each of the first and second supporting shafts is supported at both ends thereof inside the slide unit body. More preferably, the first supporting shafts on one side and the other side of the rail are formed of the same shaft. The axial center lines of the supporting shafts on one side and the other side of the rail are disposed at an acute angle with each other. The slide unit body has a first through hole formed therein, corresponding to the first supporting shaft and first rail face, and a second through hole formed therein, corresponding to the second supporting shaft and second rail face. The first and second rolling elements are respectively received in the first and second through holes. An oil retaining member may be inserted into the through hole.

According to the present invention, each of the first and second rollers rolling on the first and second rail face is roller-shaped or cylindrical in shape and its cylindrical outer circumferential surface forms a rolling surface. Therefore, a contact face of the roller with the corresponding rail face is disposed at a region with a constant radius or a constant distance from the centerline of the roller. Also, since each supporting shaft orients to the direction perpendicular to the extending direction of the corresponding rail face, or the direction of travel of the slide unit, skewing of the rollers can be prevented.

In this case, since a region where a circumferential speed is varied at the contact surface between the roller and the rail face will not occur, slippage is prevented from occurring at the contact face. As a result, wear to the contact face between the rail face and the corresponding rolling surface of the roller can be prevented.

When the first and second rollers and supporting shafts are disposed on the opposite sides of the rail, correspondingly to the first and second rail faces, and the first supporting shafts on the opposite sides of the rail are coaxial with each other, the whole structure of the linear guide is made compact.

When both ends of the first and second supporting shafts are supported inside the slide unit body, a supporting rigidity can be advanced. And when the first supporting shafts on the opposite sides of the rail are formed of the same shaft, the number of components is decreased and the structure is simplified.

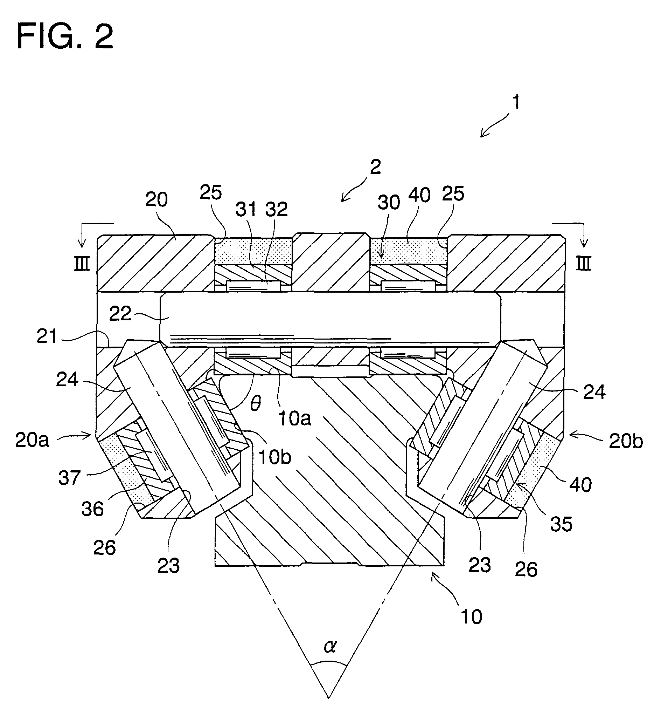

The reason why an angle α (shown in FIG. 2) between each axial center line of the second supporting shafts on the opposite sides of the rail is preferably acute or smaller than 90 degrees is that when the angle α is over 90 degrees an angle θ between the first and second rail faces is made smaller, thus decreasing the rigidity of the rail.

When a hole for receiving a roller is a through hole, boring of the slide unit body is made easier. Also, in this case, assembly of rollers into the holes can be facilitated. Moreover, when an oil retaining member, such as oil retaining plastics or felt, is inserted into the through hole, in operation, oil gradually bleeds from the oil retaining member contacting the roller, which prevents seizure or wear to the rolling surface resulting from the breakage of oil film and allows for a long-term lubrication of the rolling surface.

### BRIEF DESCRIPTION OF THE DRAWINGS

For a more complete understanding of the invention, reference should be made to the embodiments illustrated in greater detail in the accompanying drawings and described below by way of examples of the invention. In the drawings, which are not to scale:
FIG. 1 is a perspective view of a linear guide according to one embodiment of the present invention.
FIG. 2 is a lateral side sectional view of the linear guide of FIG. 1, corresponding to a cross sectional view of FIG. 3 taken along line II - II.
FIG. 3 is a top plan view of the linear guide of FIG. 1, corresponding to a schematic of FIG. 2 viewed from line III - III.
FIG. 4 is a longitudinal side view of the linear guide of FIG. 1, corresponding to a schematic of FIG. 3 viewed from line IV-IV.
FIG. 5 is a front elevational view of a conventional linear guide.
FIG. 6 is an enlarged view of a portion of FIG. 5.

### DETAILED DESCRIPTION OF THE PREFERRED EMBODIMENTS

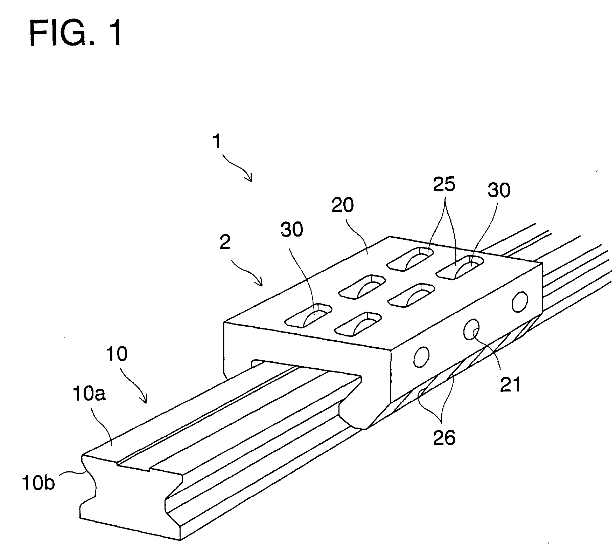

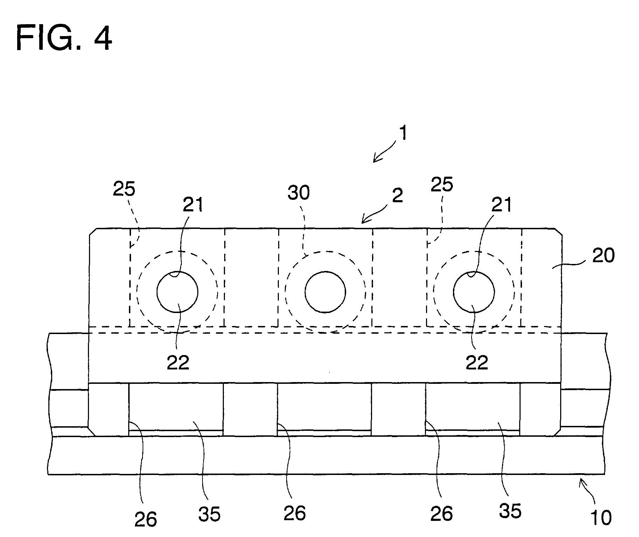

Referring now to the drawings, FIGS. 1 to 4 illustrate a linear guide of a preferred embodiment of the present invention. As shown in FIG. 1, a linear guide 1 includes a rail 10 extending linearly and a slide unit 2 slidable on the rail 10.

As shown in FIG. 2, the rail 10 includes a first rail face 10a and a second rail face 10b that is disposed at an angle θ with the first rail face 10a. These first and second rail faces 10a, 10b extend linearly along the extending direction of the rail 10. The rail 10 has a symmetrical shape in cross section. Preferably, the angle θ is 60 degrees. The angle θ is not necessarily limited to such an angle, but it needs to be an acute angle. Because the slide unit 2 tends to be easily derailed from the rail 10 when the angle θ is over 90 degrees.

The slide unit 2 includes a slide unit body 20 having a pair of downwardly depending leg portions 20a and 20b. The slide unit 2 also has a symmetrical shape in cross section.

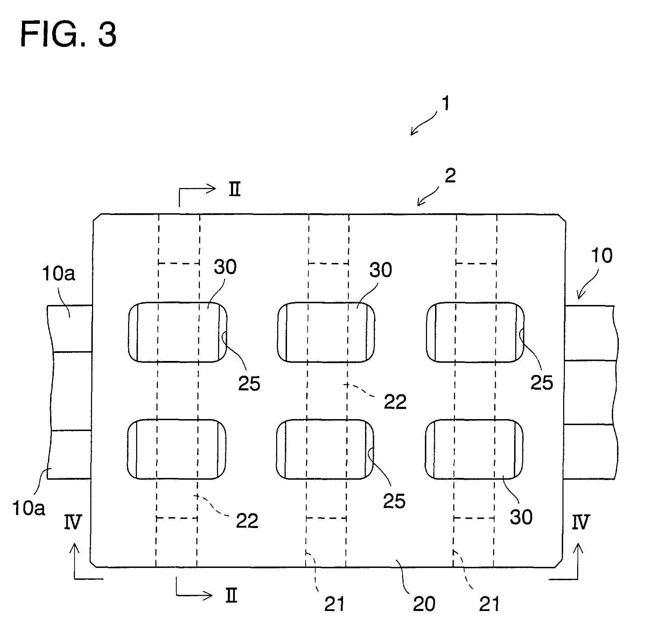

On opposite side surfaces of the slide unit body 20 are formed a plurality of transverse holes 21 penetrating the slide unit body 20 transversely. A first supporting shaft 22 is received in each of the transverse holes 21, shown in FIGS. 2 to 4. Each supporting shaft 22 orients or extends to the direction perpendicular to the extending direction of the first rail face 10a of the rail 10, as is clearly shown in FIG. 3. Each supporting shaft 22 is supported at both ends thereof in the corresponding transverse hole 21, thereby improving supporting rigidity.

Inside the leg portions 20a, 20b are formed a plurality of longitudinal holes 23 extending obliquely. A second supporting shaft 24 is received in each of the longitudinal holes 23. Each supporting shaft 24 orients or extends to the direction perpendicular to the extending direction of the second rail face 10b of the rail 10. Each supporting shaft 24 is supported at both ends thereof in the corresponding longitudinal hole 23, thereby improving supporting rigidity. Axial centerlines of the supporting shafts 24 on opposite sides of the rail 10 are disposed at an angle α with each other. The angle α may be 60 degrees, or at least an acute angle. In the case of the angle α greater than 90 degrees, an angle θ between the first and second rail faces 10a, 10b decreases and the stiffness of the rail 10 cannot be secured.

On the top surface of the slide unit body 20 are formed a plurality of pairs of through holes 25 penetrating the slide unit body 20 vertically. Each pair of through holes 25 is disposed corresponding to each transverse hole 21. An array of the through holes 25 on one side of the slide unit body 21 corresponds to the first rail face 10a on one side of the rail 10, as is clearly seen in FIG. 3. Another array of the through holes 25 on the other side of the slide unit body 21 corresponds to the first rail face 10a on the other side of the rail 10, clearly seen in FIG. 3.

On opposite side surfaces of the leg portions 20a, 20b are formed a plurality of through holes 26 penetrating the leg portions 20a, 20b obliquely. These through holes 26 correspond to the longitudinal holes 23.

A needle bearing 30, or a first rolling element, is inserted into each through hole 25. The needle bearing 30 is formed of a cylindrical outer race 31 and a plurality of needles 32 provided at an inner circumference of the outer race 31. The supporting shaft 22 passes through the needle bearing 30 and the needle bearing 30 is rotatably supported around the shaft 22. The outer race 31 of the needle bearing 30 contacts the first rail face 10a of the rail 10.

Similarly, a needle bearing 35, or a second rolling element, is inserted into each through hole 26. The needle bearing 35 is formed of a cylindrical outer race 36 and a plurality of needles 37 provided at an inner circumference of the outer race 36. The supporting shaft 24 passes through the needle bearing 35 and the needle bearing 35 is rotatably supported around the shaft 24. The outer race 36 of the needle bearing 35 contacts the second rail face 10b of the rail 10.

In operation, when the slide unit 2 travels along the rail 10, the needle bearings 30 and 35, rotating around the respective supporting shafts 22 and 24, roll on the first and second rail faces 10a and 10b of the rail 10, respectively.

According to this embodiment, each outer race 31, 36 of the needle bearings 30, 35 is roller-shaped, or generally cylindrical in shape and the cylindrical surface of the outer race 31, 36 forms a rolling surface. Thus, each contact surface between the outer races 31, 36 and the first and second rail faces 10a, 10b is disposed at a region where a distance from the centerline, or a radius, of each needle bearing 30, 35 is constant. Also, each extending direction of the supporting shafts 22, 24 is perpendicular to the corresponding extending direction of the rail faces 10a, 10b, or the direction of travel of the slide unit 2, thereby preventing skewing of each needle bearing 30, 35.

In such a manner, a circumferential speed is constant at every point of the contact surface between each needle bearing 30, 35 and the corresponding rail face 10a, 10b and thus, slippage will not occur at the contact face. Thereby, wear to the contact surface between each rail face 10a, 10b and the corresponding rolling surface of the needle bearing 30, 35 can be securely prevented.

Moreover, in this case, since the supporting shaft 22 supports a pair of needle bearings 30 each contacting the first rail face 10a on the opposite sides of the rail 10, the number of components can be reduced and the structure of the device can be simplified.

Furthermore, since holes or bearing pockets for supporting the needle bearings 30, 35 are through holes 25, 26, boring process can be facilitated. Also, installation of the needle bearings 30, 35 into the slide unit body 20 can easily be conducted through the through holes 25, 26.

In addition, according to this embodiment, assembly error between the slide unit 2 and each rail face 10a, 10b of the rail 10 can be adjusted by utilizing the outer races 31, 36 of the needle bearings 30, 35 having different outer diameters, thus facilitating adjustment of the whole device.

Also, into each through hole 25, 26 of the slide unit body 20 may be inserted an oil retaining member 40 such as oil retaining plastics, oil retaining felt, or oil soaked porous material of continuous air cell structure. In this case, by rotation of the needle bearings 30, 35, oil gradually bleeds from the inside of the oil retaining member 40 contacting the needle bearings 30, 35, thereby preventing seizure or wear to the rolling surface resulting from breakage of oil film. Moreover, in this case, since oil bleeding continues for a long period, long-term lubrication of the rolling surface can be achieved, thus allowing for maintenance-free device.

Those skilled in the art to which the invention pertains may make modifications and other embodiments employing the principles of this invention without departing from its spirit or essential characteristics particularly upon considering the forgoing teachings. The described embodiments and examples are to be considered in all respects only as illustrative and not restrictive. The scope of the invention is, therefore, indicated by the appended claims rather than by the foregoing description. Consequently, while the invention has been described with reference to particular embodiments and examples, modifications of structure, sequence, materials and the like would be apparent to those skilled in the art, yet fall within the scope of the invention.

## Claims

1. A linear guide comprising:
a rail having a first flat rail face and a second flat rail face, said first rail face extending linearly along the length thereof, said second rail face extending linearly along the length thereof and disposed at an acute angle with said first rail face; and
a slide unit slidably provided on said rail;
wherein said slide unit is formed of a slide unit body, a roller-shaped first and second rolling element that is disposed in said slide unit body and that respectively rolls on said first and second rail face, and a first and second supporting shaft that is disposed in said slide unit body, perpendicular to each extending direction of said first and second rail face and that rotatably supports said first and second rolling element, respectively.

2. The linear guide of claim 1, wherein both of said first rail face and said second rail face are disposed on opposite sides of said rail, said first and second rolling elements and said first and second supporting shafts being disposed on opposite sides of said rail, said slide unit body having a pair of leg portions depending downwardly on opposite sides thereof and housing said first and second rolling elements and said first and second supporting shafts therein, said first supporting shafts disposed on opposite sides of said rail being coaxial with each other.

3. The linear guide of claim 1 or 2, wherein opposite ends of said first and second supporting shafts are supported in said slide unit body.

4. The linear guide of claim 2, wherein said first supporting shafts disposed on said opposite sides of said rail are formed of the same shaft.

5. The linear guide of claim 2, wherein an axial center line of said second supporting shaft on one side of said rail is disposed at an acute angle with an axial center line of said second supporting shaft on the other side of said rail.

6. The linear guide of claim 1 or 2, wherein said slide unit body has a first and second through hole formed therein, said first through hole corresponding to said first supporting shaft and said first rail face, said second through hole corresponding to said second supporting shaft and said second rail face, said first and second rolling element being respectively inserted into said first and second through hole.

7. The linear guide of claim 6, wherein an oil retaining member is inserted into said through hole.

8. A slide unit (2) for sliding relative to a guide rail (10) of a linear guide (1), the slide unit comprising two roller means (30, 35) for rolling on respective guide faces (10a, 10b) of the guide rail, said two roller means having respective axes of rotation which extend in a plane parallel to that of the respective guide faces, the axes of rotation being acutely angled relative to each other.

9. A linear guide (1) comprising the slide unit (2) as claimed in claim 8 and a guide rail (10) comprising two guide faces (10a, 10b) acutely angled relative to each other and being parallel to the respective planes in which the axes of the two roller means (30, 35) extend.
